# FASCICULE DE BREVET EUROPEEN

(11) **EP 3 305 692 B1**
(45) Date de publication et mention de la délivrance du brevet: **05.08.2020**
(21) Numéro de dépôt: 17194503.3
(22) Date de dépôt: 03.10.2017
(51) Int. Cl.: B65G 47/52, B65G 47/82

(54) **TRANSFERT D'OBJETS**
TRANSFER VON GEGENSTÄNDEN
OBJECT TRANSFER

(30) Priorité: 04.10.2016 FR 1659569
(43) Date de publication de la demande: 11.04.2018
(73) Titulaire: Sidel Engineering & Conveying Solutions, 67116 Reichstett (FR)
(72) Inventeur: GEHIN, Anthony, 67116 Reichstett (FR)
(74) Mandataire: Sidel Group

(56) Documents cités:
- EP-A1- 3 112 298
- GB-A- 2 419 578
- US-A1- 2012 325 622

## Description

La présente invention se situe dans le domaine du convoyage d'objets au sein d'une ligne industrielle de traitement. Elle concerne plus particulièrement un dispositif de transfert d'objets, apte à transférer des objets d'une surface d'accumulation vers un convoyeur aval, un ensemble utilisant un tel dispositif, ainsi qu'un procédé correspondant.

Différentes solutions existent afin de déplacer des objets d'une surface d'accumulation vers un convoyeur.

Le document WO2014073690 propose un dispositif de transfert d'une surface d'accumulation vers un convoyeur de sortie, comportant un moyen de transfert robotisé équipé d'une tête de manipulation. Ce type de dispositif pousse les objets de la surface d'accumulation vers le convoyeur de sortie, ce qui nécessite l'arrêt du convoyeur de sortie afin de réduire les risques de chutes d'objets. Ces arrêts génèrent des trous dans le flux d'objets en sortie de dispositif. Les trous ainsi produits doivent être résorbés en aval du dispositif par des moyens dédiés. On connaît aussi un dispositif capable de transfert d'une surface d'accumulation vers un convoyeur aval, comportant une première bande mobile, décrit par le document EP-A-3112298, publié le 04-01-2017, après la date de dépôt du présent brevet et faisant partie de l'état de la technique au sens de l'Article 54 (3) EPC.

La présente invention a pour objet de pallier au moins en partie ces inconvénients. A cet effet, elle propose un dispositif de transfert d'une surface d'accumulation vers un convoyeur aval, comportant une première bande mobile, caractérisé en ce qu'il comporte une deuxième bande mobile, disposée au-delà de la première bande mobile en venant de la surface d'accumulation, une surface fixe disposée entre les deux bandes mobiles, et un moyen de transfert de la surface d'accumulation vers les première et deuxième bandes mobiles, et vers la surface fixe.

Grâce à ces dispositions, les objets sont transférés de la surface d'accumulation vers le convoyeur aval de façon continue, sans qu'il soit nécessaire que le convoyeur aval soit arrêté. Ainsi le flux de sortie d'objets ne comporte pas de trous, et on peut économiser l'installation de dispositifs dédiés au comblement de trous en aval. En outre, en installant à l'entrée de la surface d'accumulation un dispositif ayant un effet symétrique, on obtient une disposition des objets sur le convoyeur aval exactement dans le même ordre que celui avec lequel ils sont arrivés depuis l'amont.

Selon d'autres caractéristiques :
- ledit moyen de transfert peut être un moyen de poussée d'objets, configuré pour pousser deux rangées d'objets, transversalement par rapport à la direction de la première bande mobile, ce qui constitue un moyen de transfert efficace et peu coûteux ; le moyen de poussée se dégageant verticalement en temps masqué,
- ledit moyen de poussée peut comporter deux parois verticales configurée chacune pour pousser l'une desdites deux rangées d'objets ; on obtient ainsi une meilleure fiabilité de la poussée de la première rangée, en évitant le risque de mise en quinconce des objets entre les deux rangées,
- ledit moyen de poussée peut comporter une troisième paroi verticale disposée au-delà de la deuxième paroi verticale de sorte à maintenir les objets de la deuxième rangée lors de la poussée des deux rangées d'objets, ceci permettant de diminuer les risques de chute d'objets lors de leur transfert,
- ledit moyen de poussée peut s'étendre sur la longueur desdites deux rangées d'objets et présenter en coupe transversale une forme de deux U adjacents et renversés, les jambes des deux U constituant les trois parois verticales, constituant un moyen simple et robuste de réalisation,
- ladite surface fixe peut présenter une largeur au moins égale à la largeur du U, ceci permettant que ledit moyen de poussée soit en prise avec les objets présents sur la surface fixe sans interférer avec les objets présents sur les bandes mobiles,

La présente invention concerne aussi un ensemble comprenant un dispositif selon l'invention, et une surface d'accumulation qui est une bande transporteuse, de largeur sensiblement égale à la longueur desdites rangées, et munie d'un actionneur apte à la faire avancer en pas à pas.

Grâce à ces dispositions, le mouvement du dispositif de transfert est réduit lorsqu'il va chercher un lot d'objets. En outre, il est avantageux d'utiliser une surface d'accumulation sous la forme d'une bande mobile, puisque cela permet de libérer progressivement la zone où elle reçoit les nouveaux produits.

La présente invention concerne enfin un procédé de transfert par le moyen d'un dispositif de transfert selon l'invention, et comportant les étapes suivantes :
- poussée d'une première rangée d'objets de la surface d'accumulation sur la surface fixe et d'une deuxième rangée d'objets de la surface d'accumulation sur la première bande mobile,
- actionnement de la première bande mobile de sorte à acheminer les objets de ladite deuxième rangée vers ledit convoyeur aval, et, avant que la première bande mobile ne soit vide, poussée de ladite première rangée d'objets sur la deuxième bande mobile,
- actionnement de la deuxième bande mobile de sorte à acheminer les objets de ladite première rangée vers ledit convoyeur aval.

Grâce à ces dispositions, les objets sont transférés de la surface d'accumulation vers le convoyeur aval de façon continue, sans qu'il soit nécessaire que le convoyeur aval soit arrêté. Ainsi le flux de sortie d'objets ne comporte pas de trous, et on peut économiser l'installation de dispositifs dédiés au comblement de trous éventuels en aval.

La présente invention sera mieux comprise à la lecture de la description détaillée qui fait suite, en référence aux figures annexées dans lesquelles :
- Les figures 1 à 6 sont des vues du dessus d'un dispositif de transfert selon l'invention, dans une séquence préférée d'utilisation.
- La figures 7 à 12 sont des vues en coupe verticale d'un dispositif de transfert selon l'invention, dans une séquence préférée d'utilisation.

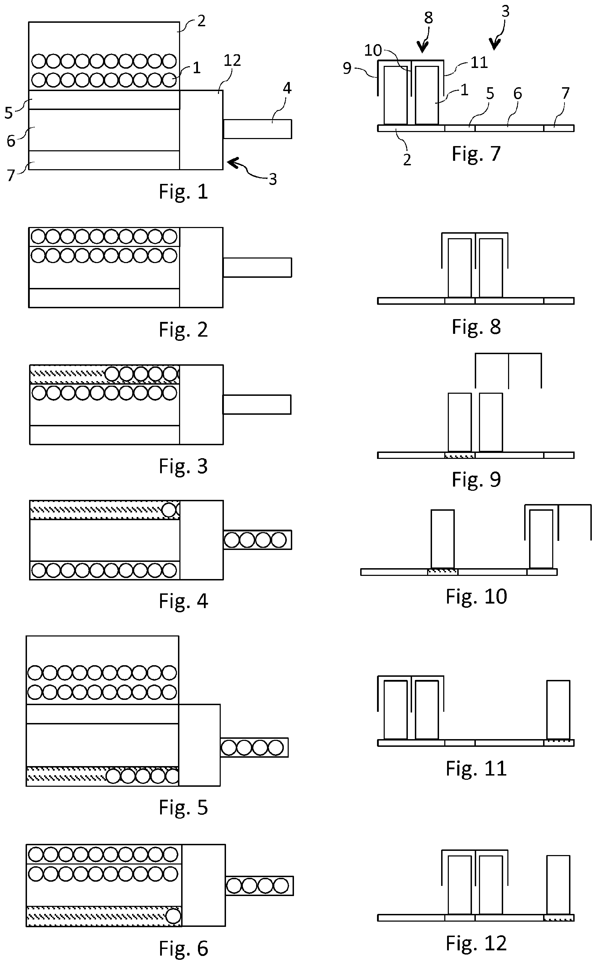

L'accumulateur représenté aux figures1 à 6, est placé entre une machine amont et une machine en aval. La machine amont alimente un convoyeur d'entrée, non représenté, par un flux d'objets 1 sous forme d'une file unique. L'accumulateur comporte une surface d'accumulation 2, et un dispositif de transfert 3 selon l'invention. Un dispositif d'entrée, qui peut être d'un type connu de l'homme du métier et non détaillé ici, transfère les objets 1 du convoyeur d'entrée vers la surface d'accumulation 2, dans une direction sensiblement transversale au déplacement des objets 1 sur le convoyeur d'entrée. Les objets 1 peuvent être stockés pendant un certain temps sur cette surface d'accumulation 2, par exemple si la machine en aval est ralentie ou stoppée. Le dispositif de transfert 3 transfère ensuite les objets 1 de la surface d'accumulation 2 vers un convoyeur aval 4, qui fait partir les objets 1 dans une direction sensiblement parallèle au convoyeur d'entrée. Le convoyeur aval 4 alimente ensuite la machine en aval par un flux d'objets 1 sous forme d'une file unique.

Le dispositif de transfert 3 comporte une première bande mobile 5, une surface fixe 6 et une deuxième bande mobile 7. Les deux bandes mobiles 5, 7 et la surface fixe 6 sont disposées comme représenté aux figures 1 à 6, l'une à côté de l'autre parallèles entre elles, à côté de la surface d'accumulation 2 et de l'autre côté de la surface d'accumulation 2 par rapport au convoyeur d'entrée. Le dispositif de transfert comporte encore un moyen de transfert 8.

Selon un premier mode de réalisation, le moyen de transfert 8 est un moyen robotisé de préhension d'une rangée, et transfère alternativement une rangée vers chacune des bandes mobiles 5 et 7. Cela nécessite toutefois un soulèvement des objets 1, et donc un moyen de préhension assez sophistiqué.

Selon un autre mode de réalisation, le moyen de transfert 8 est un moyen de poussée de deux rangées d'objets 1 en même temps. Cela permet de pousser deux rangées, dont l'une sera poussée jusque sur la surface fixe 6, et la deuxième sur la première bande mobile 5. Pendant que les objets 1 de la première bande mobile 5 sont évacués vers la sortie, le moyen de poussée pousse alors les objets 1 de la surface fixe 6 jusque sur la deuxième bande mobile 7.

Dans la suite de la description, le moyen de transfert 8 sera aussi appelé moyen de poussée 8.

Selon encore un autre mode de réalisation, le moyen de poussée 8 comporte deux parois parallèles, chacune étant prévue pour pousser l'une des deux rangées d'objets 1. On peut prévoir d'y ajouter une troisième paroi parallèle, qui servira à maintenir les objets 1 de la première rangée pendant la poussée, pour que la poussée ne les déséquilibre pas. Chaque paroi peut comporter une plaque, ou encore un ou plusieurs longerons tubulaires longitudinaux.

Selon le mode de réalisation représenté dans les dessins, le moyen de poussée 8 est tel que représenté aux figures 7 à 12, sa coupe transversale présente une forme de double U et est ouverte vers le bas. Le moyen de poussée 8 comprend trois parois 9, 10, 11 verticales, qui constituent les trois parois verticales mentionnées ci-avant. Le moyen de poussée 8 se déplace au-dessus de la surface d'accumulation 2, des bandes mobiles 5, 7 et de la surface fixe 6. Le déplacement du moyen de poussée 8 peut par exemple être commandé par un robot. Le moyen de poussée 8 peut être déplacé dans une direction transversale aux bandes mobiles 5, 7 et à la surface fixe 6, en particulier une direction perpendiculaire, qui est aussi perpendiculaire au bord aval de la surface d'accumulation. Une des parois 9, 10 du moyen de poussée peut pousser des objets 1 de la surface d'accumulation 2 vers la première bande mobile 5, de la première bande mobile 5 vers la surface fixe 6, ou de la surface fixe 6 vers la deuxième bande mobile 7. Le moyen de poussée 8 peut également être relevé au-dessus des objets 1 dans une position inactive, afin que ses parois 9, 10, 11 ne soient plus en prise avec les objets 1. Le moyen de poussée 8 pousse les objets 1 et ils sont entourés par les parois 9 et 10 ou par les parois 10 et 11. Ainsi pendant qu'une des parois 9, 10 pousse l'objet 1, une autre paroi 10, 11 située en avant du déplacement l'empêche de chuter en avant. Le maintien des objets 1 pendant qu'ils sont poussés est donc optimal, et le risque de chute est minimisé.

Le dispositif de transfert comporte encore un moyen de jonction 12, apte à réunir les deux bandes mobiles 5, 7 en une seule file, et d'alimenter ainsi le convoyeur aval 4. Un tel moyen de jonction 12 comprend éventuellement une solution du type guide qui rabat la file de l'une et / ou de l'autre bande mobile sur une colonne commune. Il peut comporter par ailleurs un moyen de synchronisation des deux bandes mobiles 5, 7, pour assurer que les objets 1 venant de la première bande mobile 5 viennent s'insérer entre deux lots d'objets 1 venant de la deuxième bande mobile 7.

Nous allons maintenant décrire le fonctionnement du dispositif de transfert 3 selon l'invention, en nous appuyant sur les figures 1 à 12.

Initialement, comme représenté aux figures 1 et 7, la surface d'accumulation 2 comporte au moins deux rangées d'objets 1. On place le moyen de poussée 8 au-dessus des deux rangées, de manière à ce que ses parois 9, 10, 11 soient en prise avec les deux rangées d'objets 1.

Le moyen de poussée 8 est ensuite déplacé transversalement jusqu'au-dessus de la première bande mobile 5 et de la surface fixe 6. Les deux rangées d'objets 1 sont poussées simultanément par le moyen de poussée 8, et on arrive à la situation illustrée aux figures 2 et 8 : une des rangées se trouve sur la première bande mobile 5, et la deuxième rangée se trouve sur la surface fixe 6.

La première bande mobile 5 est ensuite mise en route, et les objets 1 présents sur la première bande mobile 5 se déplacent vers le moyen de jonction 12. Pendant ce temps, le moyen de poussée 8 est relevé en position inactive, et se déplace pour se dégager de la première rangée, située sur la première bande mobile 5, pour ne prendre plus que la deuxième rangée, située sur la surface fixe 6. Cette situation est illustrée aux figs. 3 et 9.

Le moyen de poussée 8 redescend ensuite en position active, afin que les objets 1 présents sur la surface fixe 6 soit en prise avec le moyen de poussée 8, entourés de deux parois 9, 10. Les objets 1 présents sur la surface fixe 6 sont alors poussés vers la deuxième bande mobile 7, et cette poussée est terminée préférablement avant que les objets 1 qui se trouvaient sur la première bande mobile 5 soient tous entrés dans le moyen de jonction 12, comme illustré en figures 4 et 10.

Successivement, les bandes mobiles 5, 7 atteignent à tour de rôle une vitesse nominale depuis une vitesse nulle qu'elles ont lorsqu'elles reçoivent les produits ou objets 1, cette vitesse nominale correspondant à la vitesse du convoyeur aval 4. Le moyen de jonction 12 assure alors que se suivent les lots de la première bande mobile 5 et de la deuxième bande mobile 7, en évitant un trou entre deux lots successifs, provenant de deux bandes différentes.

Au moment où tous les objets 1 qui étaient présents sur la première bande mobile 5 ont fini de la quitter, la première bande mobile 5 s'arrête, et la deuxième bande mobile 7 est à la vitesse nominale. Préférablement, la deuxième bande 7 démarre avant l'arrêt de la première bande 5. Selon le mode de fonctionnement du moyen de jonction 12 et les vitesses des bandes mobiles 5, 7, la deuxième bande mobile 7 peut se mettre en route légèrement avant ou après l'arrêt de la première bande mobile 5. Pendant que les objets 1 présents sur la deuxième bande mobile 7 se déplacent vers le moyen de jonction 12, le moyen de poussée 8 est relevé en position inactive, déplacé jusqu'au-dessus de la surface d'accumulation 2, puis redescend en position active normalement au-dessus de deux lots suivants à traiter. Le dispositif est alors tel qu'illustré aux figures 5 et 11, avec le moyen de poussée 8 revenu dans sa position initiale de la figure 7.

Le moyen de poussée 8 est ensuite déplacé transversalement jusqu'au-dessus de la première bande mobile 5 et de la surface fixe 6, poussant une première rangée d'objets 1 sur la première bande mobile 5 et une deuxième rangée d'objets 1 sur la surface fixe 6. Cette poussée peut être terminée avant que les objets 1 qui étaient présents sur la deuxième bande mobile 7 soient tous entrés dans le moyen de jonction 12. Le dispositif de transfert est alors dans la situation illustrée aux figures 6 et 12.

A l'instant où tous les objets 1 qui étaient sur la deuxième bande mobile 7 sont entrés dans le moyen de jonction, le dispositif se retrouve dans la situation représentée en figures 2 et 8. Le transfert des objets 1 de la surface d'accumulation 2 vers le convoyeur aval 4 peut alors se poursuivre, en répétant continuellement les étapes décrites ci-dessus.

Le fait de disposer deux bandes mobiles 5, 7, sur lesquels les objets 1 sont transférés après leur accumulation, permet que le convoyeur aval 4 soit alimenté en permanence, sans qu'aucun trou ne se forme dans le flux d'objets 1. Ceci permet d'éviter de placer des dispositifs additionnels dédiés au comblement de ces trous, qui complexifient l'installation.

Si on n'avait que ces deux bandes mobiles 5, 7, sans la surface fixe 6 intermédiaire, il faudrait éventuellement arrêter les deux bandes mobiles 5, 7 en même temps pour pousser des objets 1 sur ces bandes depuis la surface d'accumulation 2, et on ne pourrait alors pas alimenter en continu le convoyeur en aval 4.

La surface fixe 6 donne la possibilité de disposer des objets 1 entre les deux bandes 5, 7, de sorte que pendant que la première bande mobile 5 démarre, puis accélère pour alimenter le convoyeur en aval 4, on peut pousser ces objets 1 sur la deuxième bande mobile 7 sans gêner les objets 1 disposés sur la première bande mobile 5. Cette dernière 5 peut livrer tous ses objets 1 au convoyeur aval 4, puis ralentir jusqu'à l'arrêt, pour être prête à recevoir un nouveau lot par poussée depuis la surface d'accumulation. La deuxième bande mobile 7 est alors prête à livrer à son tour des objets 1 au convoyeur en aval 4, et on arrive ainsi à alimenter le convoyeur en aval 4 de manière continue, sans trous.

De plus, le dispositif de transfert 3 selon l'invention, grâce à l'arrêt des bandes mobiles 5, 7 durant le transfert et dans le mode préféré de réalisation des dessins grâce à la forme particulière de son moyen de poussée 8, permet aux objets 1 de rester stables lors de leur transfert. Ainsi, il peut être utilisé à des cadences élevées sans risque de chutes d'objets 1 ou de bourrage.

En outre l'invention permet de transférer les objets 1 de la surface d'accumulation 2 vers une bande à l'arrêt 5, 7, le cas échéant en passant par la surface fixe 6. La première bande 5 est à l'arrêt quand les objets 1 sont poussés de la surface d'accumulation 2 vers la première bande 5 et la surface fixe 6, puis se met en route pour alimenter le convoyeur en aval 4. A ce moment-là, la deuxième bande mobile 7 est à l'arrêt, ce qui permet de pousser les objets 1 de la surface fixe 6 vers cette deuxième bande 7, qui se met alors en route pour assurer la continuité des objets 1 sur le convoyeur en aval 4 quand la première bande 5 a fini de livrer ses objets 1, et se met à nouveau à l'arrêt. On obtient donc bien une continuité d'objets 1 sur un convoyeur en aval 4 toujours en mouvement à une vitesse nominale, alors que les objets 1 sont transférés par un moyen très simple et peu coûteux, comme l'est le balayage avec maintien par le fond, entre des surfaces à fleur, à savoir la surface d'accumulation, la première bande mobile 5, la surface fixe 6 et la deuxième bande mobile 7. Ce moyen simple est aussi un moyen universel, sans nécessité d'adaptation pour des formats d'objets 1 différents à pousser.

Dans des modes de réalisation particuliers, le moyen de transfert 8 prend la forme de deux outillages séparés. Ainsi, le premier outillage assure le transfert transversal d'une paire de colonnes d'objets 1, une colonne sur la première bande mobile 5 et une colonne sur la surface fixe 6. L'autre outillage assure, quant à lui, le transfert ultérieur d'une colonne d'objets 1 depuis la surface fixe 6 jusque sur la deuxième bande mobile 7. Il est alors possible de superposer au moins en partie les cycles de fonctionnement, respectivement du premier outillage et du deuxième outillage, à savoir l'amenée de deux lots sur une bande et la surface fixe, et l'amenée d'un lot de la surface fixe jusque sur l'autre bande. L'extraction de deux lots de la surface d'accumulation 2 se fait donc dans un cycle qui se déroule au moins en partie alors que se déroule un autre cycle au cours duquel un lot est amené de la surface fixe 6 vers la bande mobile concernée. Cela contribue notamment au temps de cycle. En outre, le deuxième outillage peut être de conception simple, puisqu'il ne fait que tirer un lot depuis la surface fixe 6 jusque sur la deuxième bande mobile 7.

Dans encore d'autres modes de réalisation, le moyen de transfert 8 traite simultanément un seul lot, et traite donc, l'un après l'autre, le lot à destination de la première bande mobile 5 et le lot à destination de la deuxième bande mobile 7. Le moyen de transfert 8 peut donc être particulièrement simple. Le procédé de fonctionnement peut alors être le suivant.

Dans l'étape initiale, un deuxième lot se trouve sur la surface fixe 6, à l'issue du cycle précédent. La première étape à partir de là consiste essentiellement, pour le moyen de transfert 8, à décaler un premier lot de la surface d'accumulation 2 jusque sur la première bande mobile 5. Cette dernière peut alors être mise en mouvement pour dégager les objets 2 qui forment le lot qu'elle porte. Pendant ce temps, la deuxième étape du procédé consiste essentiellement pour le moyen de transfert 8, à décaler sur la deuxième bande mobile 7 le deuxième lot, jusqu'alors sur la surface fixe 6. La deuxième bande mobile 7 est mise en mouvement de sorte à assurer plus en aval la jonction en une seule file continue, respectivement du premier lot et du deuxième lot. Une fois que tous les produits 1 du premier lot ont été dégagés du vis-à-vis de la surface d'accumulation 2 et ne gênent donc pas un transfert transversal des objets 1 de toute la surface d'accumulation 2, la troisième étape consiste, pour le moyen de transfert 8, à décaler un nouveau deuxième lot sur la surface fixe 6, ce qui amène alors le système à la configuration de départ.

On obtient ainsi une configuration particulièrement simple.

On entend par « surface d'accumulation 2 » une surface tampon recevant des objets qui transitent entre deux machines qui les traitent par exemple sur une file ou plusieurs files. Cette surface d'accumulation permet que l'arrêt de la machine aval n'entraîne pas l'arrêt de la machine amont et vice versa.

Comme indiqué précédemment, le dispositif de transfert comprend une première et une deuxième bande mobile 5, 7 et une surface fixe 6 disposée entre les deux bandes mobiles 5, 7. Il comprend également un moyen de transfert 8 de la surface d'accumulation 2 vers les première et deuxième bandes mobiles 5, 7, et vers la surface fixe 6, notamment avec un seul ou deux outils pouvant travailler simultanément.

La surface d'accumulation 2 et le convoyeur aval 4 sont respectivement à l'entrée et à la sortie du dispositif de transfert 3. Ce dispositif 3 a pour fonction de faire passer les objets de la surface d'accumulation 2 vers le convoyeur aval 4. Dès lors, la surface d'accumulation 2 et le dispositif de transfert 3 peuvent former un ensemble. Un tel ensemble peut comprendre en outre le convoyeur aval 4.

L'ensemble comprend ainsi le dispositif de transfert 3 comme précité, et une surface d'accumulation 2 qui est une bande transporteuse mobile ou une sole de glissement. La surface d'accumulation 2 comprend un côté amont qui est le plus éloigné du dispositif de transfert 3 et qui est opposé à un côté aval selon une direction d'accumulation. Le côté aval de la surface d'accumulation 2 est placé de manière adjacente à la longueur de la première bande mobile 5 et la direction d'accumulation est transversale à la direction de la première bande mobile 5.

La surface d'accumulation 2 est généralement de forme rectangulaire. Dans le cadre de la présente invention, les côtés de la surface d'accumulation 2 qui s'étendent le long de la direction d'accumulation sont appelé longueur et les côtés amont et aval de cette même surface 2 sont appelés largeur.

La largeur de la surface d'accumulation 2 qui correspond ainsi notamment au côté aval, peut être sensiblement égale à la longueur des rangées d'objets 1.

Dans le mode de réalisation où la surface d'accumulation 2 est une bande transporteuse, elle peut être munie d'un actionneur apte à la faire avancer, notamment en pas à pas, en particulier selon la direction d'accumulation vers la première bande mobile 5.

Dans un autre mode de réalisation où la surface d'accumulation est une sole de glissement, les objets 1 supportés par cette sole peuvent être déplacés de l'amont vers l'aval avec le moyen de transfert 8 ou un autre outil similaire, c'est à dire un moyen de poussée, configuré pour pousser une ou plusieurs rangées d'objets 1. Un outil, identique ou différent du moyen de transfert 8 peut être utilisé pour déplacer les objets 1 depuis un convoyeur amont vers la surface d'accumulation 2.

## Revendications

1. Dispositif de transfert (3) d'une surface d'accumulation (2) vers un convoyeur aval (4), ledit dispositif de transfert comportant une première bande mobile (5), **caractérisé en ce qu'**il comporte une deuxième bande mobile (7), disposée au-delà de la première bande mobile (5) en venant de la surface d'accumulation (2), une surface fixe (6) disposée entre les deux bandes mobiles (5, 7), et un moyen de transfert (8) de la surface d'accumulation (2) vers les première et deuxième bandes mobiles (5, 7), et vers la surface fixe (6), par exemple un moyen de transfert (8) avec un seul outil ou encore un moyen de transfert (8) avec deux outils différents pouvant travailler simultanément.

2. Dispositif de transfert (3) selon la revendication précédente, dans lequel ledit moyen de transfert (8) est un moyen de poussée, configuré pour pousser deux rangées d'objets (1), transversalement par rapport à la direction de la première bande mobile (5), par exemple deux rangées à la fois, ou seulement une rangée à la fois.

3. Dispositif selon la revendication précédente, dans lequel ledit moyen de poussée (8) comporte deux parois verticales (9, 10) configurée chacune pour pousser l'une desdites deux rangées d'objets (1).

4. Dispositif selon la revendication précédente, dans lequel ledit moyen de poussée (8) comporte une troisième paroi verticale (11) disposée au-delà de la deuxième paroi verticale (10) de sorte à maintenir les objets (1) de la deuxième rangée lors de la poussée des deux rangées d'objets (1).

5. Dispositif selon la revendication précédente, dans lequel ledit moyen de poussée (8) s'étend sur la longueur desdites deux rangées d'objets (1), et présente en coupe transversale une forme de deux U adjacents et renversés, les jambes des deux U constituant les trois parois verticales (9, 10, 11).

6. Dispositif selon la revendication précédente, dans lequel ladite surface fixe (6) présente une largeur au moins égale à la largeur du U.

7. Ensemble comprenant un dispositif selon l'une des revendications précédentes, et une surface d'accumulation (2) qui est une bande transporteuse, de largeur sensiblement égale à la longueur desdites rangées, et munie d'un actionneur apte à la faire avancer, notamment en pas à pas.

8. Procédé de transfert par le moyen d'un dispositif de transfert (3) selon l'une des revendications 1 à 6, et comportant les étapes suivantes :
- poussée d'une première rangée d'objets (1) de la surface d'accumulation (2) sur la surface fixe (6) et d'une deuxième rangée d'objets (1) de la surface d'accumulation (2) sur la première bande mobile (5), notamment simultanément, ou encore en deux étapes séquentielles,
- actionnement de la première bande mobile (5) de sorte à acheminer les objets (1) de ladite deuxième rangée vers ledit convoyeur aval (4), et avant que la première bande mobile (5) ne soit vide, poussée de ladite première rangée d'objets (1) sur la deuxième bande mobile (7), notamment accélération de la première bande mobile (5) jusqu'à la vitesse du convoyeur aval (4) puis circulation à sa vitesse,
- actionnement de la deuxième bande mobile (7) de sorte à acheminer les objets (1) de ladite première rangée vers ledit convoyeur aval (4), notamment accélération de la deuxième bande mobile (7) jusqu'à la vitesse du convoyeur aval (4) puis circulation à sa vitesse.

## Patentansprüche

1. Vorrichtung (3) für einen Transfer von einer Staufläche (2) zu einem nachgeschalteten Förderer (4), wobei die Transfervorrichtung ein erstes bewegbares Band (5) umfasst, **dadurch gekennzeichnet, dass** sie ein zweites bewegbares Band (7), das von der Staufläche (2) aus kommend jenseits des ersten bewegbaren Bandes (5) angeordnet ist, eine ortsfeste Fläche (6), die zwischen den zwei bewegbaren Bändern (5, 7) angeordnet ist, und ein Mittel für einen Transfer (8) von der Staufläche (2) zu dem ersten und zweiten bewegbaren Band (5, 7) und zu der ortsfesten Fläche (6), beispielsweise ein Transfermittel (8) mit einem einzelnen Werkzeug oder aber ein Transfermittel (8) mit zwei unterschiedlichen Werkzeugen, die simultan arbeiten können, umfasst.

2. Transfervorrichtung (3) nach dem vorhergehenden Anspruch, wobei das Transfermittel (8) ein Schiebemittel ist, das dazu konfiguriert ist, zwei Reihen von Gegenständen (1) quer zu der Richtung des ersten bewegbaren Bandes (5) zu schieben, beispielsweise zwei Reihen gleichzeitig oder nur eine Reihe auf einmal.

3. Vorrichtung nach dem vorhergehenden Anspruch, wobei das Schiebemittel (8) zwei vertikale Wände (9, 10) umfasst, die jeweils dazu konfiguriert sind, eine der zwei Reihen von Gegenständen (1) zu schieben.

4. Vorrichtung nach dem vorhergehenden Anspruch, wobei das Schiebemittel (8) eine dritte vertikale Wand (11) umfasst, die jenseits der zweiten vertikalen Wand (10) angeordnet ist, um die Gegenstände (1) der zweiten Reihe während des Schiebens der zwei Reihen von Gegenständen (1) zu halten.

5. Vorrichtung nach dem vorhergehenden Anspruch, wobei sich das Schiebemittel (8) über die Länge der zwei Reihen von Gegenständen (1) erstreckt und im Querschnitt eine Form von zwei aneinander angrenzenden und umgekehrten Us aufweist, wobei die Beine der zwei Us die drei vertikalen Wände (9, 10, 11) bilden.

6. Vorrichtung nach dem vorhergehenden Anspruch, wobei die ortsfeste Fläche (6) eine Breite aufweist, die mindestens gleich der Breite des Us ist.

7. Einheit, die Folgendes beinhaltet: eine Vorrichtung nach einem der vorhergehenden Ansprüche und eine Staufläche (2), die ein Transportband ist, dessen Breite im Wesentlichen gleich der Länge der Reihen ist und das über ein Stellglied verfügt, das fähig ist, es insbesondere schrittweise voranzutreiben.

8. Verfahren für einen Transfer mittels einer Transfervorrichtung (3) nach einem der Ansprüche 1 bis 6, das die folgenden Schritte umfasst:
- Schieben einer ersten Reihe von Gegenständen (1) von der Staufläche (2) auf die ortsfeste Fläche (6) und einer zweiten Reihe von Gegenständen (1) von der Staufläche (2) auf das erste bewegbare Band (5), insbesondere simultan oder aber in zwei aufeinander folgenden Schritten,
- Aktivieren des ersten bewegbaren Bandes (5), um die Gegenstände (1) der zweiten Reihe zu dem nachgeschalteten Förderer (4) zu befördern, und, bevor das erste bewegbare Band (5) leer ist, Schieben der ersten Reihe von Gegenständen (1) auf das zweite bewegbare Band (7), insbesondere Beschleunigen des ersten bewegbaren Bandes (5) auf die Geschwindigkeit des nachgeschalteten Förderers (4) und dann Zirkulieren mit dessen Geschwindigkeit,
- Aktivieren des zweiten bewegbaren Bandes (7), um die Gegenstände (1) der ersten Reihe zu dem nachgeschalteten Förderer (4) zu befördern, insbesondere Beschleunigen des zweiten bewegbaren Bandes (7) auf die Geschwindigkeit des nachgeschalteten Förderers (4) und dann Zirkulieren mit dessen Geschwindigkeit.

## Claims

1. Device (3) for transfer from an accumulation surface (2) to a downstream conveyor (4), said transfer device having a first moving belt (5), **characterized in that** it has a second moving belt (7), positioned beyond the first moving belt (5) coming from the accumulation surface (2), a stationary surface (6) positioned between the two moving belts (5, 7), and a means (8) for transfer from the accumulation surface (2) to the first and second moving belts (5, 7), and to the stationary surface (6), for example a transfer means (8) with a single tool or else a transfer means (8) with two different tools that can work simultaneously.

2. Transfer device (3) according to the preceding claim, in which said transfer means (8) is a push means, configured to push two rows of objects (1), transversely relative to the direction of the first moving belt (5), for example two rows at a time, or only one row at a time.

3. Device according to the preceding claim, in which said push means (8) has two vertical walls (9, 10), each configured to push one of said two rows of objects (1).

4. Device according to the preceding claim, in which said push means (8) has a third vertical wall (11) positioned beyond the second vertical wall (10) so as to support the objects (1) of the second row during the pushing of the two rows of objects (1).

5. Device according to the preceding claim, in which said push means (8) extends over the length of said two rows of objects (1) and has in cross-section a shape of two adjacent and inverted U's, the legs of the two U's forming the three vertical walls (9, 10, 11).

6. Device according to the preceding claim, in which said stationary surface (6) has a width at least equal to the width of the U.

7. Unit comprising a device according to one of the preceding claims, and an accumulation surface (2) that is a conveyor belt, having a width approximately equal to the length of said rows, and provided with an actuator able to cause it to advance, particularly step by step.

8. Method of transfer by means of a transfer device (3) according to one of Claims 1 to 6, and having the following steps:
- pushing of a first row of objects (1) from the accumulation surface (2) onto the stationary surface (6) and of a second row of objects (1) from the accumulation surface (2) onto the first moving belt (5), particularly simultaneously, or else in two sequential steps,
- actuation of the first moving belt (5) in such a way as to route the objects (1) from said second row to said downstream conveyor (4), and, before the first moving belt (5) is empty, pushing of said first row of objects (1) onto the second moving belt (7), particularly acceleration of the first moving belt (5) up to the speed of the downstream conveyor (4) then circulation at its speed,
- actuation of the second moving belt (7) in such a way as to route the objects (1) from said first row to said downstream conveyor (4), particularly acceleration of the second moving belt (7) up to the speed of the downstream conveyor (4) then circulation at its speed.
